# EUROPÄISCHE PATENTSCHRIFT

(11) **EP 0 782 384 B1**
(45) Veröffentlichungstag und Bekanntmachung des Hinweises auf die Patenterteilung: **10.02.1999**
(21) Anmeldenummer: 95933368.3
(22) Anmeldetag: 13.09.1995
(51) Int. Cl.: A01J 7/02

(54) **VORRICHTUNG ZUM REINIGEN VON MELKBECHERN**
DEVICE FOR CLEANING MILKING CUPS
DISPOSITIF DE NETTOYAGE DE GOBELETS TRAYEURS

(30) Priorität: 14.09.1994 DE 4432754
(43) Veröffentlichungstag der Anmeldung: 09.07.1997
(73) Patentinhaber: Maier, Jakob, 86842 Türkheim (DE)
(72) Erfinder: LAUB-MAIER, Maria, D-86842 Türkheim (DE); MAIER, Jakob, jun., D-86842 Türkheim (DE)
(74) Vertreter: Grünecker, Kinkeldey, Stockmair & Schwanhäusser Anwaltssozietät
(86) Internationale Anmeldenummer: EP9503608
(87) Internationale Veröffentlichungsnummer: WO9608137

(56) Entgegenhaltungen:
- EP-A- 0 535 754
- AU-B- 564 242
- DE-A- 3 931 601
- FR-A- 2 215 889
- GB-A- 1 035 004
- US-A- 4 516 592

## Beschreibung

Die Erfindung betrifft eine Vorrichtung zum Reinigen von Melkbechern entsprechend dem Oberbegriff des Anspruchs 1.

Die Erfindung betrifft auch ein Reinigungselement und ein Verfahren zum Reinigen von Melkbechern entsprechend den Oberbegriffen der Ansprüche 20 und 22.

Es sind in Melkmaschinen verwendete Vorrichtungen zum Reinigen der Melkbecher und der sich daran anschließenden Milchleitungen bekannt, die ein am geöffneten Ende der Melkbecher ansetzbares Reinigungselement aufweisen, durch das Spülflüssigkeit in den Innenraum der Melkbecher geleitet wird, so daß der Melkbecherinnenraum und die sich daran anschließende Milchleitung durch die Spülfüssigkeit gereinigt werden. Meistens ist der zu reinigende Melkbecher mit dem angesetzten Reinigungselement in einen geschlossenen Spülmittelkreislauf eingebunden.

Es hat sich herausgestellt, daß eine auf den Innenraum der Melkbecher beschränkte Reinigung, die vor allem zum Entfernen von Milchresten dient, auf die Dauer nicht ausreichend ist, und auch auf der Außenseite der Melkbecher eine Reinigung erfolgen muß.

Aus der DE 38 31 601 A1 ist eine Vorrichtung zum Reinigen der äußeren Konturen von Zitzenbechern bzw. Melkbechern bekannt, in der die Melkbecher zur Reinigung in einem Gehäuse angeordnet werden, in dem rotierende Bürstenköpfe vorgesehen sind. Die Bürstenköpfe bearbeiten insbesondere den geöffneten Endteil der Melkbecher, wobei eine Reinigungsflüssigkeit zugeführt wird.

Eine weitere Reinigungsvorrichtung ist aus der DE 42 93 178 T1 bekannt. Diese bekannte Vorrichtung umfaßt ein Reinigungselement mit einem in die Öffnung des Melkbechers einführbaren, eine Spülwasserdüse aufweisenden Teil für die Reinigung des Melkbecherinnenraums. Ferner ist das Reinigungselement mit Spülwasserdüsen versehen, die im angesetzten Zustand zur Außenreinigung Reinigungsflüssigkeit auf die Stirnseite des Melkbechers aufsprühen. Um ein zu weites seitliches Wegspritzen der aufgesprühten Reinigungsflüssigkeit zu verhindern, ist das Reinigungselement mit einer den Melkbecher glockenartig übergreifenden Abschirmung versehen. Da die Reinigungsflüssigkeit in die Umgebung gelangt, darf sie keine intensiv wirkenden Reinigungsmittel enthalten.

Aus der AU-B-564242 ist eine Vorrichtung gemäß Oberbegriff des Anspruchs 1 bekannt, welche ein Reinigungselement mit einem becherförmigen Teil und einem vom Becherboden koaxial zum Becherteil vorstehenden, eine ringförmige Einschnürung aufweisenden Zapfen umfaßt. Im Reinigungsbetrieb steht der Öffnungsrand der Zitzengummiöffnung in die Einschnürung hinein vor und der becherförmibe Teil liegt unter Bildung einer Ringspülkammer umlaufend gegen den Rand der Zitzengummistirnfläche an. Eine Spülströmung tritt nahe dem Becherboden aus dem Zapfen aus, strömt zunächst etwa in einer Richtung senkrecht zur Stirnfläche des Zitzengummis und dann etwa parallel zu der Stirnfläche des Zitzengummis in Richtung zu der Zitzengummiöffnung.

Es ist die Aufgabe der vorliegenden Erfindung, eine Reiniungsvorrichtung der eingangs erwähnten Art, ein Reinigungselement und ein Verfahren für die Reinigung von Melkbechern zu schaffen, wobei gegenüber dem Stand der Technik in bezug auf die Außenreinigung der Melkbecher den gewachsenen Anforderungen an eine hygienische Milchgewinnung in verbesserter Art und Weise Rechnung getragen wird.

Die diese Aufgabe lösende Vorrichtung und das die Aufgabe lösende Reinigungselement und Verfahren wird durch die Merkmale des Anspruchs 1, 20 und 22 wiedergegeben.

Durch diese erfindungsgemäße Lösung läßt sich über einem zu reinigenden Oberflächenbereich des Melkbechers, der neben der Stirnfläche am geöffneten Ende auch Melkbecherseitenoberflächen umfassen kann, eine intensive Reinigungsströmung erzeugen. Durch diese Reinigungsströmung kann insbesondere die langfristige Bildung von Erregerherden selbst an Seitenoberflächen des Melkbechers bekämpft und damit eine Übertragung der Erreger von Tier zu Tier, insbesondere die Übertragung besonders gefährlicher Staphylokokken, verhindert werden.

In einer bevorzugten Ausführungsform ist der durch das elastische Saugelement (Zitzengummi) gebildete Innenraum des Melkbechers zur aufeinanderfolgenden Durchspülung mit der Strömungskammer verbunden und insbesondere zu der Strömungskammer hin geöffnet. Durch diese Verbindung der Strömungskammer mit dem Innenraum des Melkbechers können eine Außenreinigung und eine Innenreinigung des Melkbechers gleichzeitig zugeführt werden, wobei die Strömungskammer und der Melkbecherinnenraum vorzugsweise in einen geschlossenen Spülkreislauf, der auch die sich an den Melkbecher anschließende Milchleitung umfaßt, eingebunden sind. Damit kann Reinigungsflüssigkeit nicht in die Umgebung gelangen.

Ein besonderer Vorteil der kombinierten Außen- und Innenreinigung gemäß der Erfindung liegt auch darin, daß durch die Außenspülung auch eine Reinigung des Reinigungselements selbst erfolgt, so daß einer Erregerübertragung vom Reinigungselement über den Melkbecher auf das Tier vorgebeugt werden kann.

In vorteilhafter Ausgestaltung der Erfindung ist das Reinigungselement kappen- oder becherförmig ausgebildet und unter Bildung einer kappenförmigen, durch Anlage im wesentlichen des Becherrandes gegen den Melkbecher abgedichteten Strömungskammer auf das geöffnete Ende des Melkbechers aufsetzbar, und es sind Mittel zum Erzeugen einer Spülströmung entsprechend dieser Form der Strömungskammer Vorgesehen. Bei dieser Ausführungsform wird Vorteilhaft eine ringförmige, in bezug auf die Melkbecherlängsachse rotationssymmetrische Spülströmung erzeugt. Durch diese Spülströmung, bei der der Strömungsfluß zunächst längsseitig und dann über die Stirnfläche des Melkbechers radial zur Becheröffnung hin erfolgen kann, wird eine umfassende Reinigung des die Öffnung aufweisenden Melkbecherendes erreicht.

Vorzugsweise umfassen die Mittel zur Erzeugung einer ringförmigen Spülströmung eine etwa am Becherrand umlaufende, zu der Strömungskammer hin geöffnete Spülmittelringleitung, die gleichmäßig über den Umfang der Ringleitung verteilt Spülflüssigkeit in die ringförmige Strömungskammer hinein abgibt.

In einer anderen bevorzugten Ausführungsform wird zur Bildung einer ringförmigen Spülströmung das becherfömige Reinigungselement doppelwandig mit einem Wandzwischenraum ausgebildet. Dabei weist der Wandzwischenraum einen Spülmittelanschluß auf, der vorzugsweise konzentrisch zur Achse des Reinigungselements bzw. des Melkbechers vorgesehen ist. Dem Wandzwischenraum zugeführte Spülflüssigkeit kann unter Erzeugung einer ringförmigen Spülströmung von dem Wandzwischenraum durch eine ringförmige Öffnung oder ringförmig verteilte Öffnungen in die Strömungskammer übertreten.

In weiterer vorteilhafter Ausgestaltung der Erfindung kann das Reinigungselement mit einer im angesetzten Zustand an dem Melkbecher, insbesondere der Zitzengummiaußenfläche anliegenden Dichtungslippe versehen sein, oder der Zitzengummi weist eine Dichtungslippe auf, die im angesetzten Zustand des Reinigungslements an dem Reinigungselement zur Abdichtung der Strömungkammer anliegt.

Vorteilhaft kann die Dichtungslippe Teil einer zur Befestigung des Reingigungselements an dem Melkbecher dienenden Rasteinrichtung sein, wobei mit dem Einrasten des Reinigungselements eine Arretierung des Reinigungselements an dem Melkbecher derart erfolgt, daß durch festliegende Wandabstände ein konstantes Volumen der Strömungskammer und damit eine konstante Spülmitteldurchflußmenge gewährleistet ist.

Zur Sicherstellung einer ausreichenden Durchflußmenge an Spülmittel dienen in einer vorteilhaften Ausführungsform ferner gegen den zu reinigenden Oberflächenbereich des Melkbechers vorstehende, mit dem Reinigungselement verbundene Abstandshalter.

Vorteilhaft weist das Reinigungselement ferner ein im angesetzten Zustand in den Innenraum des Melkbechers hineinragendes Teil auf, das durch geeignete Verengung des Querschnitts des Melkbecherinnenraums in dem die Zitzen aufnehmenden Bereich für eine besonders schnelle und intensive Spülströmung sorgt.

In einer besonderen Ausführungsform ist das Reinigungselement mit einem an dem Hülsenteil des Melkbechers einrastbaren Haltebügel verbunden, durch den das Reinigungselement an dem Melkbecher befestigt und arretiert wird. Dieser Haltebügel kann eine einen Spülnebenzweig bildende Spülleitung aufweisen, die im eingerasteten Zustand des Bügels an ein am Hülsenteil vorgesehenes Lufteinlaßventil angeschlossen ist, das in Verbindung mit der Milchleitung steht. Mit einer solchen Anordnung kann eine umfassende, auch das Lufteinlaßventil einschließende Reinigung des Melkbechers erfolgen.

Weitere vorteilhafte Ausgestaltungsmöglichkeiten der Erfindung gehen aus den Unteransprüchen hervor.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: ein erstes Ausführungsbeispiel für eine erfindungsgemäße Vorrichtung, die ein mit einem Haltebügel verbundenes Reinigungselement aufweist,
- Fig. 2: ein zweites Ausführungsbeispiel für eine erfindungsgemäße Reinigungsvorrichtung mit einem an einem Zitzengummi eines Melkbechers einrastbaren Reinigungselement,
- Fig. 3: ein weiteres Ausführungsbeispiel für eine erfindungsgemäße Vorrichtung mit einem Reinigungselement, das zur Erzeugung einer Ringströmung eine Spülflüssigkeit führende Ringleitung aufweist, und
- Fig. 4: ein weiteres Ausführungsbeispiel für eine erfindungsgemäße Vorrichtung mit einem durch eine Trägerplatte gebildeten Reinigungselement.

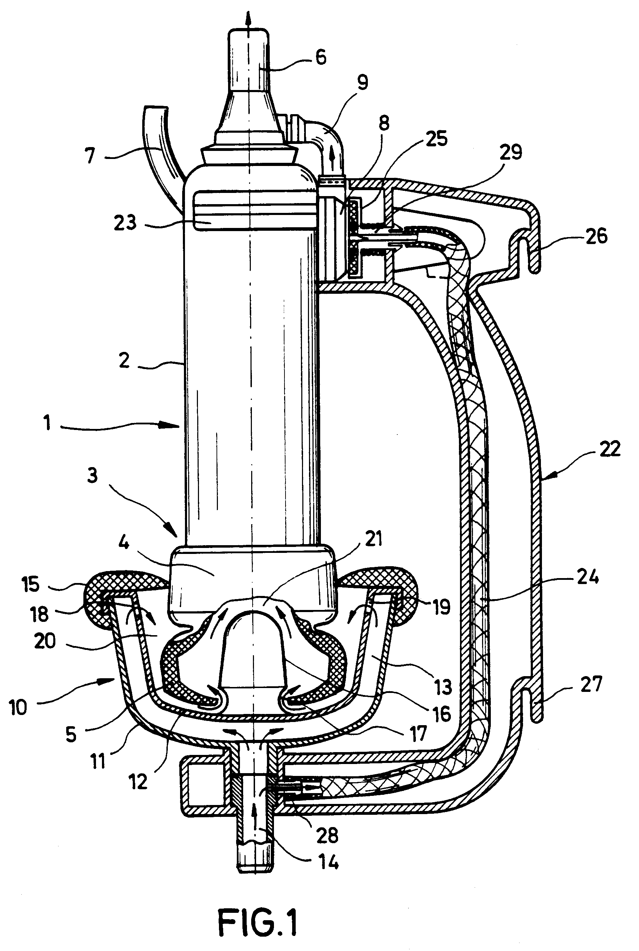

In der Fig. 1 ist mit dem Bezugszeichen 1 ein Melkbecher mit einem metallischen Hülsenteil 2 und einem aus einem elastischen Material, hier z.B. Gummi, bestehenden Zitzenbecher 3 bezeichnet. Der Zitzengummi 3 weist einen über das Hülsenteil 2 gestülpten Teil 4, einen sich an den Teil 4 anschließenden Lippenteil 5 und einen in der Fig. 1 nicht sichtbaren, sich durch das Hülsenteil 2 erstreckenden Innenteil auf. Der flexible Innenteil bildet einen mit Unterdruck beaufschlagbaren Innenraumteil, der sich an einen durch den Lippenteil 5 gebildeten Teil 21 des Melkbecherinnenraums anschließt und mit einem Milchleitungsanschluß 6 in Verbindung steht. Das Hülsenteil 2 ist mit einem Anschluß 7 versehen, der mit einem Unterdruckbehälter verbindbar und zu dem durch das Hülsenteil 2 und den Zitzengummiinnenteil gebildeten Zwischenraum hin geöffnet ist. An dem Hülsenteil 2 ist ferner ein Lufteinlaßventil 8 vorgesehen, das über eine Verbindungsleitung 9 mit dem Milchleitungsanschluß 6 in Verbindung steht.

Mit dem Bezugszeichen 10 ist in der Fig. 1 ein Reinigungselement bezeichnet, das doppelwandig mit einer Außenwand 11 und einer Innenwand 12 ausgebildet ist. Zwischen der Außenwand 11 und der Innenwand 12 ist ein Zwischenraum 13 gebildet, der mit einem Anschlußstück 14 für eine in der Fig. 1 nicht gezeigte Spülmittelleitung in Verbindung steht. In dem gezeigten Ausführungsbeispiel ist das Anschlußstück 14 konzentrisch zur Achse des becherförmig ausgebildeten Reinigungselements 10 vorgesehen. In der in Fig. 1 gezeigten Anordnung, in der das Reinigungselement 10 an den Melkbecher 1 angesetzt ist, ist der Spülleitungsanschluß 14 auch konzentrisch zur Längsachse des Melkbechers 1 angeordnet. Am Rand des becherförmigen Reinigungselements ist die Innenwand 12 nach außen abgewinkelt und übergreift die Außenwand 11, so daß der Zwischenraum 13 am Rand des becherförmigen Reinigungselements abgeschlossen ist. Auf den Becherrand ist ein ringförmiges Dichtungselement 15 aufgesetzt, das mit einer Lippe gegen den über den Hülsenteil 2 des Melkbechers 1 gestülpten Teil 4 des Zitzengummis 3 anliegt. Denkbar wäre aber auch eine Abdichtung weiter oben am Hülsenteil 2. Auf dem Boden der Innenwand 12 ist konzentrisch zur Becherachse bzw. Melkbecherachse ein in den durch den Lippenteil 5 des Zitzengummis 3 gebildeten Innenraumteil 21 vorstehendes Teil 16 vorgesehen. Das Teil 16 weist eine Einschnürung auf, in die der Lippenteil 5 des Zitzengummis 3 unter Beibehaltung eines Zwischenraums 17 zwischen dem Lippenteil 5 und dem vorstehenden Teil 16 hineinsteht. Die Becherinnenwand ist ferner mit Öffnungen 18 und 19 versehen. Weitere solche, in der Fig. 1 nicht sichtbare Öffnungen sind gleichmäßig über den Umfang der Innenwand 12 verteilt.

Durch die Innenwand 12, das Dichtungsteil 15 und das Zitzengummi 3 ist eine zur Längsachse des Melkbechers 1 konzentrische Strömungskammer 20 gebildet, die durch die Lippe des Dichtungsteils 15 nach außen hin abgedichtet ist. Die Strömungskammer 20 steht über die Öffnungen 18 und 19 und die erwähnten weiteren derartigen Öffnungen in Verbindung mit dem Zwischenraum 13 zwischen der Innenwand 12 und der Außenwand 11 des becherförmigen Reinigungselements 10. Die Strömungskammer 20 ist ferner über den zwischen dem Lippenteil 5 und dem vorstehenden Teil 16 an der Einschnürung belassenen Zwischenraum 17 mit dem durch den Zitzengummi gebildeten Innenraumteil 21 des Melkbechers 1 verbunden.

In dem gezeigten Ausführungsbeispiel ist das Reinigungselement 10 an dem Spülmittelanschluß 14 mit einem Ende eines Haltebügels 22 verbunden, dessen anderes Ende an dem Hülsenteil 2 des Melkbechers 1 befestigt ist. Zur Befestigung weist der Haltebügel 22 zwei federnde, den Hülsenteil 2 umgreifende Teile auf, von denen in der Fig. 1 das Teil 23 sichtbar ist. Eine Arretierung in Richtung der Längsachse des Melkbechers ist dadurch gegeben, daß das von dem Hülsenteil 2 vorstehende Lufteinlaßventil 8 in eine entsprechende, in dem Haltebügel 22 vorgesehene Ausnehmung eingerastet ist.

In dem gezeigten Ausführungsbeispiel ist der Haltebügel innen hohl vorgesehen, und darin ist eine Spülmittelleitung 24 verlegt, die an einem Ende mit dem Spülmittelanschluß 14 in Fluidverbindung steht und am anderen Ende an einer zum Spülen des Ventils 8 vorgesehene und eine Anschlußverbindung an das Ventil 8 herstellende Verteilereinrichtung 25 angeschlossen ist.

Der Haltebügel 22 weist ferner zwei Halterungshaken 26 und 27 auf.

Bei dem Reinigungselement 10 und dem Haltebügel 22 handelt es sich in dem gezeigten Ausführungsbeispiel um Kunststoffteile. Das Dichtungsteil 15 ist aus einem geeigneten flexiblen Material, wie zum Beispiel Gummi hergestellt. Die in dem Haltebügel 22 Verlegte Spülmittelleitung 24 besteht in dem gezeigten Ausführungsbeispiel ebenfalls aus einem flexiblen Material und ist jeweils an ihren Enden auf ein Anschlußstück 28 bzw. 29 aufgesteckt.

Zum Reinigen des Melkbechers 1 mit Hilfe der gezeigten Vorrichtung erfolgt ein Spülmitteldurchfluß entsprechend den eingezeichneten Strömungspfeilen.

Über den Spülmittelanschluß 14 wird Spülmittel zugeführt, das zum Teil in den Zwischenraum 13 und zum Teil in die Spülmittelleitung 24 fließt. Durch die konzentrische Anordnung des Anschlusses 14 verteilt sich das Spülmittel gleichmäßig in dem Zwischenraum 13, und durch die über den Umfang verteilten Öffnungen 18 und 19 beim Übertritt des Spülmittels in die Strömungskammer 20 wird in der Strömungskammer 20 eine zur Längsachse des Melkbechers konzentrische Ringströmung erzeugt, die zunächst entlang der Längsaußenseiten des Melkbechers und dann entlang der Stirnaußenseite radial zu der zwischen dem Lippenteil 5 und dem vorstehenden Teil 16 gebildeten Öffnung 17 in den durch den Zitzengummi 3 gebildeten Melkbecherinnenraum 21 hinein fließt. Dort setzt sich der Strömungsfluß in konzentrischer Form fort. Durch die beschriebene Strömung erfolgt sowohl eine Reinigungsspülung der Melkbecheraußenseite als auch dessen Innenraums. Durch einen engen Zwischenraum zwischen der Innenwand 12 und dem Lippenteil 15 und den dadurch geringen Strömungsquerschnitt ist für eine hohe Strömungsgeschwindigkeit der Spülströmung und damit für einen hohen Reinigungseffekt gesorgt. Im Melkbecherinnenraum 21 sorgt das vorstehende Teil 16 für eine entsprechende, eine hohe Spüleffizienz gewährleistende Strömungsquerschnittsverengung. Die Spülflüssigkeit strömt durch den gesamten Melkbecherinnenraum und anschließend durch die in der Fig. 1 nicht gezeigte, mit dem Milchleitungsanschluß 6 verbundene Milchleitung.

Vorzugsweise ist ein geschlossener Spülmittelkreislauf vorgesehen, in dem die Strömung des Spülmittels durch einen an der Milchleitung anliegenden Saugunterdruck bewirkt wird. Es kann aber auch eine Druckpumpe zur Spülströmungserzeugung verwendet werden. Entgegen der gezeigten Richtung könnte die Spülmittelströmung auch in umgekehrter Richtung erzeugt werden.

Abweichend von dem in Fig. 1 gezeigten Ausführungsbeispiel könnte die Innenwand 12 des Reinigungselements 10 mit gegen die Außenoberfläche des Melkbechers vorstehenden Abstandshaltern versehen sein, durch die verhindert wird, daß sich der flexible Zitzengummi unter zu starker Verengung des Strömungsquerschnitts gegen die Innenwand 12 anlegt. Zweckmäßig sind diese Abstandshalter als in Strömungsrichtung verlaufende Stege ausgebildet.

Das in die Spülmittelleitung 24 fließende Spülmittel wird über die Verteilereinrichtung 25 zur Spülung des Ventils 8 über das Ventil 8 verteilt und tritt durch das geöffnete Ventil 8 über die Verbindungsleitung 9 zurück in den durch den Milchleitungsanschluß 6 fließenden Spülmittelhauptstrom. Dementsprechend bildet die Spülmittelleitung 24 einen Nebenzweig des Spülmittelstroms.

Als Spülmittel kommen neben Wasser vor allem Flüssigkeiten in Betracht, die intensive Reinigungsmittel enthalten können. Im Anschluß an eine Flüssigkeitsspülung kann auch noch eine Spülung mit Druckluft durchgeführt werden, um Spülmittelreste innerhalb des Melkbechers und Leitungssystems zu entfernen.

In einer Melkmaschine sind zweckmäßige mehrere der in Fig. 1 gezeigten Reinigungselemente mit Haltebügel vorgesehen, nämlich in zum Beispiel für einen Satz von Melkbechern ausreichender Anzahl. Die an die Melkbecher angeschlossenen Reinigungselemente können während der Reinigung die Haken 26 und 27 an einer geeigneten Aufhängung oder durch andere geeignete Mittel gehaltert werden.

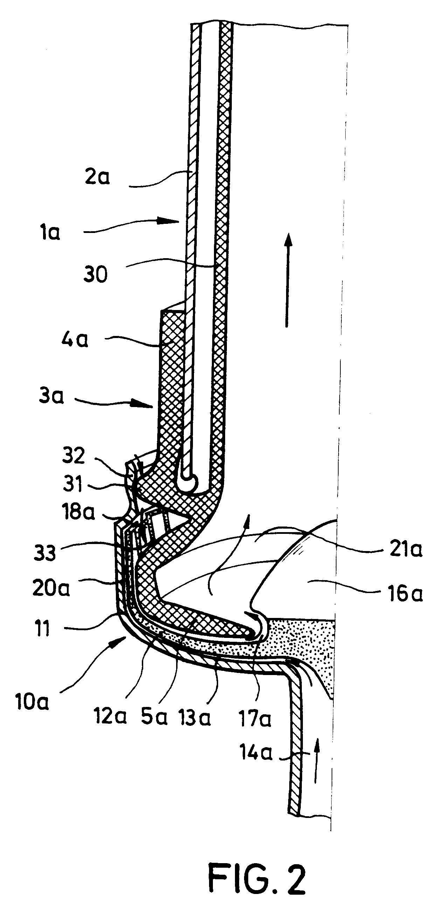

In der Fig. 2 sind in der Fig. 1 gezeigten Teilen entsprechende Teile mit der gleichen, jedoch mit dem Buchstaben a versehenen Bezugszahl bezeichnet.

Das in der Fig. 2 gezeigte Ausführungsbeispiel unterscheidet sich von dem Ausführungsbeispiel gemäß Fig. 1 vor allem dadurch, daß zur Befestigung und Arretierung eines Reinigungselements 10a an einem Melkbecher 1a kein Haltebügel verwendet wird, sondern das Reinigungselement 10a am Zitzengummi 3a des Melkbechers 1a einrastet, wobei ein von dem Zitzengummi 3a Vorstehender Ringsteg 31 in eine entsprechende Rastnut 32 des Reinigungselements 10a eingreift. Der vorstehende Ringsteg 31 dient gleichzeitig als Dichtungslippe.

Ein weiterer Unterschied zu dem Ausführungsbeispiel gemäß Fig. 1 besteht darin, daß eine der Innenwand 12 entsprechende Innenwand durch ein Einlegeteil 12a gebildet ist. Von dem Einlegeteil 12a stehen Abstandshalter sowohl gegen eine Außenwand 11a des Reinigungselements 10a als auch einen Lippenteil 5a eines Zitzengummis 3a vor. Von den genannten Abstandshaltern sind in der Fig. 2 nur die Abstandshalter 33 gezeigt. Das Einlegeteil 12a umfaßt in dem gezeigten Ausführungsbeispiel auch ein in einen durch den Zitzengummi gebildeten Innenraum 21a des Melkbechers 1a vorstehendes Teil 16a mit einer Einschnürung, in die unter Beibehaltung eines Zwischenraums 17a der Lippenteil 5a hineinsteht. Mit dem Bezugszeichen 30 ist in der Fig. 2 der in der Fig. 1 nicht sichtbare Teil des Zitzengummis bezeichnet, durch den innerhalb des Melkbechers ein flexibler Schlauch gebildet ist.

Zum Reinigen des Melkbechers 1a wird das Reinigungselement 10a, das über einen Leitungsanschluß 14a mit einer in der Fig. 2a nicht gezeigten Spülmittelleitung verbunden ist, auf das Zitzengummi 3a des Melkbechers 1a aufgesteckt, wobei der Ringsteg 31 in die Rastnut 32 der Außenwand 11a des Reinigungselements 10a einrastet. Durch die Einrastung ist das Reinigungselement an dem Melkbecher ausreichend befestigt und arretiert, so daß keine zusätzlichen Halterungen erforderlich sind. Durch den vorstehenden Ringsteg 31 ist gleichzeitig eine zwischen dem Einlegteil 12a und dem Lippenteil 5a gebildete Strömungskammer 20a abgedichtet. Wie die gezeichneten Strömungspfeile zeigen, fließt über den Spülmittelanschluß 14a zugeführtes Spülmittel in einer zur Längsachse des Melkbechers koaxialen Strömung durch einen Zwischenraum 13a, der zwischen der Außenwand 11a des Reinigungselements 10a und dem Einlegeteil 12a gebildet ist, und gelangt über gleichmäßig über den Umfang des Einlegeteils 12a verteilte Öffnungen 18a in die Strömungskammer 20a, in der es entlang der zu reinigenden Oberfläche des Zitzengummis 3a strömt und für eine Reinigung der Oberfläche sorgt. Durch die Öffnung 17a gelangt das Spülmittel dann weiter in den Melkbecherinnenraum 21a, wo es für eine Innenraumspülung sorgt. Wie bei dem vorangehenden Ausführungsbeispiel wird durch die Verwendung des vorstehenden Teils 16a der Strömungsquerschnitt begrenzt, so daß eine genügend intensive Spülströmung auch im Innenraum gewährleistet ist. Der Innenraum 21a ist über seinen durch den schlauchartigen Zitzengummiteil 30 mit einer in der Fig. 2 nicht gezeigten, sich an den Melkbecher 1a anschließenden Milchleitung verbunden, so daß neben einer Spülung des Melkbechers 1a auch eine Spülung der sich daran anschließenden Milchleitung erfolgt.

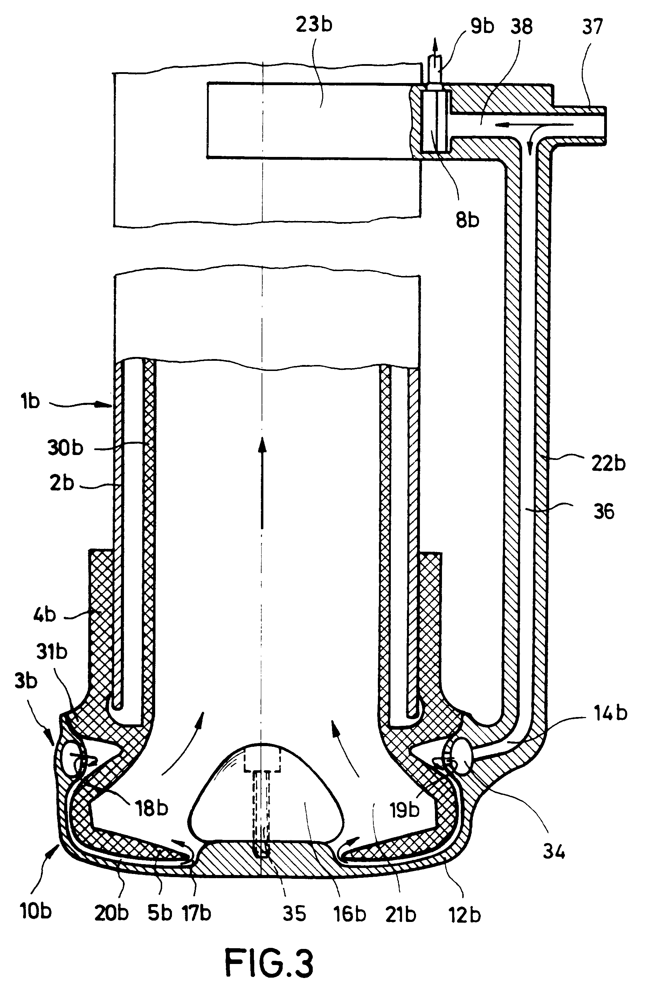

In der Fig. 3 sind solche Teile, die in den vorangehenden Figuren gezeigten Teilen entsprechen, mit der gleichen, jedoch mit den Buchstaben b versehenen Bezugszahl bezeichnet.

Das Ausführungsbeispiel von Fig. 3 unterscheidet sich von den vorangehenden Ausführungsbeispielen im wesentlichen durch die Spülmittelzuführung.

Ein becherförmiges Reinigungselement 10b ist in diesem Ausführungsbeispiel nur als einwandiges Kunststoffteil mit einer Wand 12b ausgebildet. Nahe dem Rand des becherförmigen Reinigungselements 10b ist eine Ringleitung 34 vorgesehen, die über ihren Umfang verteilt Öffnungen aufweist, von denen in der Fig. 3 die Öffnungen 18b und 19b sichtbar sind. Die Ringleitung steht in Verbindung mit einer Spülmittelzuführungsleitung 36, die in einem mit dem Reinigungselement 10b verbundenen Haltebügel 22b vorgesehen ist.

Die Ringleitungsöffnungen 18b und 19b bilden eine Verbindung zu einer Strömungskammer 20b, die zwischen der Wand 12b und einem Lippenteil 5b eines Zitzengummis 3b eines Melkbechers 1b gebildet ist. Ein im einen Melkbecherinnenraum 21b vorstehendes Teil 16b ist im gezeigten Ausführungsbeispiel durch eine Schraube 35 mit dem übrigen Reinigungselement 10b verbindbar. Der Zitzengummi 3b weist einen Ringsteg 31b auf, der unter Abdichtung der Strömungskammer 20b gegen das Reinigungselement 10b anliegt.

Der Haltebügel 22b kann an seinem dem Reinigungselement 10b entgegengesetzten Ende über den Melkbecher 1b umgreifende federnde Teile, von denen in der Figur das Teil 23b gezeigt ist, befestigt werden, wobei ein vom Hülsenteil 2b des Melkbechers 1b vorstehendes Lufteinlaßventil 8b in eine entsprechende Ausnehmung des Haltebügels 22b unter Arretierung der das Reinigungselement und den Haltebügel umfassenden Anordnung einrastet. An diesem Befestigungsende weist der Haltebügel 22b ferner einen Spülmittelanschluß 37 auf, der sowohl mit der hier durch ein starres Rohr gebildeten Spülmittelleitung 36 als auch einer das Lufteinlaßventil 8b zur Reinigung mit Spülmittel versorgenden Leitung 38 in Verbindung steht.

Zur Reinigung des Melkbechers 1b wird das das Reinigungselement 10b und den Haltebügel 22b umfassende Teil an dem Melkbecher 1b befestigt, wobei das vorstehende Ventil 8b unter Arretierung der genannten Anordnung in einer entsprechenden Ausnehmung des Haltebügels 22b einrastet. In diesem eingerasteten Zustand liegt der Ringsteg 31b des Zitzengummis 3b unter Abdichtung der Strömungkammer 20b auf dem Reinigungselement 10b auf. Durch den Anschluß 37 zugeführtes Spülmittel fließt sowohl durch die Leitung 36 als auch die Leitung 38. Das durch die Leitung 36 strömende Spülmittel gelangt in die Ringleitung 34 und tritt über die Öffnungen 18b und 19b (und weiteren derartigen nicht gezeigten Öffnungen) in die Strömungskammer 20b ein, worin sich wie bei den vorangehenden Ausführungsbeispielen eine zu der Längsachse des Melkbechers 1b koaxiale, die Außenoberfläche des Zitzengummis reinigende Ringströmung ausbildet. Durch die Öffnung 17b gelangt das Spülmittel ferner in den Innenraum 21b des Melkbechers 1b, durchströmt den gesamten Innenraum des Melkbechers und gelangt schließlich in eine an den Melkbecher angeschlossene, in der Fig. 3 nicht gezeigte Milchleitung. Durch die Leitung 38 fließendes Spülmittel dient zur Spülung des Ventils 8b und gelangt über eine Verbindung 9b in diese Milchleitung.

Durch Verwendung der Ringkammer gemäß dem Ausführungsbeispiel von Fig. 3 braucht keine doppelwandige Ausbildung des Reinigungselements zu erfolgen, so daß der Aufbau der ReinigungsVorrichtung insgesamt einfach ist.

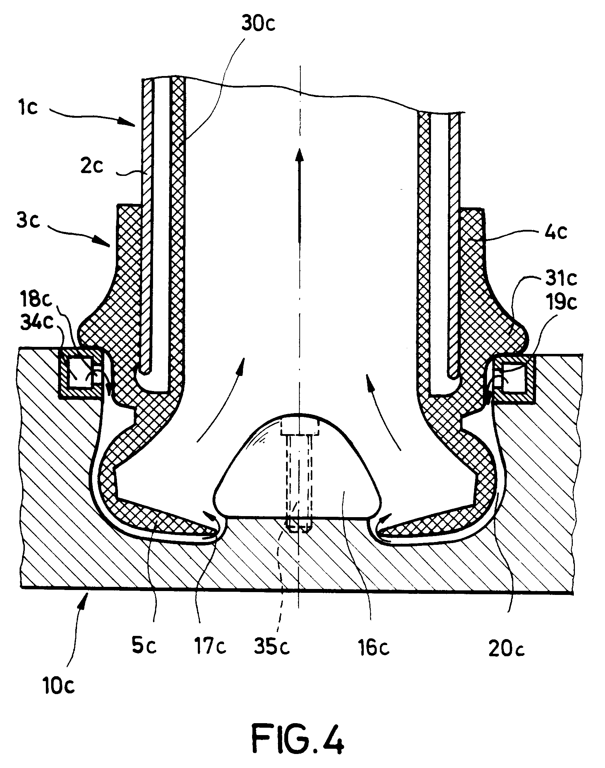

Bei dem in der Fig. 4 gezeigten Ausführungsbeispiel sind solche Teile, die in den vorangehenden Figuren gezeigten Teilen entsprechen, mit der gleichen, jedoch mit den Buchstaben c versehenen Bezugszahl bezeichnet.

Das Ausführungsbeispiel gemäß Fig. 4 unterscheidet sich von dem Ausführungsbeispiel nach Fig. 3 im wesentlichen dadurch, daß ein Reinigungselement 10c durch eine Platte gebildet ist, welche eine Vertiefung zur Aufnahme des die Öffnung aufweisenden Endteils eines Melkbechers 1c aufweist. In der Platte können mehrere solcher Vertiefungen zur Aufnahme einer Anzahl von Melkbechern ausgebildet sein. In der das Reinigungselement 10c bildenden Platte ist eine Ringleitung 34c vorgesehen, die mit einer in der Fig. 4 nicht gezeigten Spülmittelzuführungsleitung in Verbindung steht.

Zur Reinigung wird der Melkbecher 1c in die Vertiefung in der Platte eingesetzt, wobei ein Zitzengummi 3c des Melkbechers 1c mit einem vorstehenden Ringsteg 31c auf dem Rand der Vertiefung aufsitzt und die zwischen dem Zitzengummi und der Platte gebildete Strömungskammer 20c dadurch abdichtet. Zur Halterung des Melkbechers 1c in der mit den Ringsteg 31c gegen die Platte anliegenden Stellung, können weitere, in der Fig. 4 nicht gezeigte Halterungsmittel verwendet werden.

Im Gegensatz zu den gezeigten Ausführungsbeispielen könnte die Strömungskammer zur Leitung einer Spülströmung nur über die die Öffnung aufweisende Stirnfläche des Melkbechers, oder einen Teil davon, oder aber zur Leitung einer auch noch das Hülsenteil wenigstens teilweise spülenden Strömung ausgebildet sein. Zur Leitung einer Spülströmung über die Stirnfläche könnte sich eine der Innenwand 12 entsprechende Innenwand nur über der Stirnfläche erstrecken.

## Patentansprüche

1. Vorrichtung zum Reinigen von Melkbechern mit Zitzengummis, mit einem an einem Melkbecher (1) ansetzbaren, Spülmittel zuführenden Reinigungselement (10) zur Spülung des Melkbechers, wobei das Reinigungselement (10) unter Bildung einer Strömungskammer (20) zum Erzeugen einer auf eine zu reinigende Außenfläche des Melkbechers einwirkenden Spülströmung an den Melkbecher ansetzbar ist,
**dadurch gekennzeichnet,**
daß die Strömungskammer (20) eine der zu reinigenden Außenfläche im Abstand gegenüberliegende Strömungsbegrenzungswand (12) zum Erzeugen einer zwischen der Strömungsbegrenzungswand (12) und der Außenfläche von einem Spülmitteleinlaß (18, 19) bis zu einem Spülmittelauslaß (17) im wesentlichen entlang der Außenfläche geführten Spülströmung aufweist.

2. Vorrichtung nach Anspruch 1, **dadurch gekennzeichnet**, daß der Spülmittelauslaß (17) mit dem Inneren des an das Reinigungselement (10) ansetzbaren Melkbechers (1) zur aufeinanderfolgenden Durchspülung der Strömungskammer (20) und des Inneren des Melkbechers (1) in Verbindung steht.

3. Vorrichtung nach Anspruch 1 oder 2, **dadurch gekennzeichnet**, daß sich die Strömungskammer (20) in der Form einer/eines auf das geöffnete Ende des Melkbechers (1), insbesondere auf den Zitzengummi (3), aufgesetzten Kappe bzw. Deckels unter Erzeugung der Spülströmung wenigstens entlang von einem Teil der die Melkbecheröffnung aufweisenden Stirnfläche des Melkbechers erstreckt.

4. Vorrichtung nach einem der Ansprüche 1 bis 3, **dadurch gekennzeichnet**, daß das Reinigungselement (10) kappen- bzw. becherförmig ausgebildet und unter Bildung einer kappenförmigen, durch Anlage im wesentlichen des Kappen- bzw. Becherrandes gegen den Melkbecher (1) abgedichteten Strömungskammer (20) auf das geöffnete Ende des Melkbechers aufsetzbar ist, und daß das Reinigungselement Mittel zum Erzeugen einer Spülströmung im wesentlichen entsprechend der Form der Strömungskammer (20) aufweist.

5. Vorrichtung nach Anspruch 4, **dadurch gekennzeichnet**, daß die Mittel zum Erzeugen der Spülströmung eine etwa am Becherrand umlaufende, zu der Strömungskammer (20) hin geöffnete Spülmittelringleitung (34) umfassen.

6. Vorrichtung nach Anspruch 4, **dadurch gekennzeichnet**, daß das Reinigungselement (10) zur Erzeugung der Spülströmung doppelwandig mit einem Wandzwischenraum (13) ausgebildet ist, wobei der Wandzwischenraum (13) einen Spülmittelanschluß (14) aufweist und ringförmig zu der Strömungskammer (20) hin geöffnet ist.

7. Vorrichtung nach Anbruch 6, **dadurch gekennzeichnet**, daß der Spülmittelanschluß (14) konzentrisch zur Achse des Reinigungselements (10) bzw., im angesetzten Zustand des Reinigungselements, des Melkbechers (1) vorgesehen ist.

8. Vorrichtung nach einem der Ansprüche 1 bis 7, **dadurch gekennzeichnet**, daß das Reinigungselement (10) mit einer im angesetzten Zustand an dem Melkbecher, insbesondere an der Zitzengummiaußenfläche, anliegenden Dichtungslippe (15) versehen ist.

9. Vorrichtung nach einem der Ansprüche 1 bis 8, **dadurch gekennzeichnet**, daß das Reinigungslement (10) eine Ringnut (32) aufweist, die im angesetzten Zustand des Melkbechers (1) mit einem entsprechenden Ringsteg (31) an dem Melkbecher (1) oder dem Zitzengummi (3a) dichtend in Eingriff bringbar ist.

10. Vorrichtung nach einem der Ansprüche 1 bis 9, **dadurch gekennzeichnet**, daß das Reinigungselement (10a) gegen den zu reinigenden Außenflächenbereich des Melkbechers vorstehende Abstandhalter (33) aufweist.

11. Vorrichtung nach einem der Ansprüche 1 bis 10, **dadurch gekennzeichnet**, daß das Reinigungselement (10a) zur Befestigung am Melkbecher (1a) an dem Zitzengummi (3a) einrastbar ist.

12. Vorrichtung nach Anspruch 11, **dadurch gekennzeichnet**, daß das Reinigungselement (10a) an dem Zitzengummi (3a) unter Abdichtung der Strömungskammer (20a) einrastbar ist.

13. Vorrichtung nach einem der Ansprüche 11 bis 10, **dadurch gekennzeichnet**, daß mit dem Reinigungselement (10) ein Haltebügel (22) verbunden ist, der am Hülsenteil (2) des Melkbechers (1) unter Arretierung des Reinigungselements (10) einrastbar ist.

14. Vorrichtung nach Anspruch 13, **dadurch gekennzeichnet**, daß der Haltebügel (22) des Reinigungselements (10) im angesetzten Zustand des Melkbechers mit einem von dem Melkbecher (1) vorstehenden Lufteinlaßventil (8) einrastbar ist.

15. Vorrichtung nach Anspruch 14, **dadurch gekennzeichnet**, daß der Haltebügel eine beim Einrasten an das Lufteinlaßventil (8, 8b) anschließbare Spülleitung (24, 38) umfaßt.

16. Vorrichtung nach einem der Ansprüche 1 bis 15, **dadurch gekennzeichnet**, daß die Strömungskammer (20) in einem geschlossenen, die sich an den Melkbecher (1) anschließende Milchleitung umfassenden Spülmittelkreislauf angeordnet ist.

17. Vorrichtung nach Anspruch 16, **dadurch gekennzeichnet**, daß durch die Spülmittelleitung (24) des Haltebügels (22) ein Nebenzweig des Spülmittelkreislaufs herstellbar ist.

18. Vorrichtung nach einem der Ansprüche 1 bis 17, **dadurch gekennzeichnet**, daß zur Erzeugung der Spülströmung eine Druck- oder Saugpumpe vorgesehen ist.

19. Vorrichtung nach einem der Ansprüche 1 bis 15, **dadurch gekennzeichnet**, daß das Reinigungselement ein in den durch den Zitzengummi gebildeten Innenraum (21) des Melkbechers vorstehendes Teil (16) zur Verringerung des Spülströmungsquerschnitts innerhalb des Innenraums aufweist.

20. Reinigungselement, das zur innen- und außenseitigen Reinigungsspülung an einen Melkbecher (1) unter Bildung einer Strömungskammer (20) zur Erzeugung einer Spülströmung entlang einem zu reinigenden Außenflächenbereich des Melkbechers (1) ansetzbar ist, **dadurch gekennzeichnet,** daß die Strömungskammer (20) eine der zu reinigenden Außenfläche im Abstand gegenüberliegende Strömungsbegrenzungswand (12) zum Erzeugen einer zwischen der Strömungsbegrenzungswand (12) und der Außenfläche von einem Spülmitteleinlaß (18, 19) bis zu einem Spülmittelauslaß (17) im wesentlichen entlang der Außenfläche geführten Spülströmung aufweist.

21. Reinigungselement nach Anspruch 20, **dadurch gekennzeichnet**, daß das Reinigungselement (10; 10a) durch eine Rastbefestigung (8, 23; 31, 32) an dem Melkbecher (1a) arretierbar ist.

22. Verfahren zum Reinigen von Melkbechern, bei dem eine Spülung des Melkbechers erfolgt, indem entlang einem zu reinigenden Bereich der Melkbecheraußenoberfläche eine Spülströmung geleitet wird, **dadurch gekennzeichnet,** daß im Abstand der zu reinigenden Außenfläche zu dieser gegenüberliegend eine Strömungsbegrenzungswand (12) angeordnet und eine Spülströmung zwischen der Strömungsbegrenzungswand (12) und der Außenfläche von einem Spülmitteleinlaß (18, 19) bis zu einem Spülmittelauslaß (17) im wesentlichen entlang der Außenfläche geführt wird.

23. Verfahren nach Anspruch 22, **dadurch gekennzeichnet**, daß eine aufeinanderfolgende Spülung der Melkbecheraußenoberfläche und des durch einen Zitzengummi gebildeten Innenraums des Melkbechers durchgeführt wird.

24. Verfahren nach Anspruch 22 oder 23, **dadurch gekennzeichnet**, daß eine zur Melkbecherlängsachse konzentrische, in die Zitzenöffnung abfließende Spülströmung erzeugt wird.

## Claims

1. A device for cleaning milking cups with teat rubbers, comprising a cleaning element (10) which supplies a rinsing agent, said cleaning element (10) being adapted to be attached to a milking cup (1) and being used for rinsing said milking cup, the cleaning element (10) being adapted to be attached to the milking cup such that a flow chamber (20) is formed for producing a rinsing flow acting on an outer surface of the milking cup to be cleaned,
**characterized in**
that the flow chamber (20) comprises a flow restriction wall (12) which extends in opposed, spaced relationship with the outer surface to be cleaned and which is used for producing a rinsing flow conducted between said flow restriction wall (12) and said outer surface from a rinsing-agent inlet (18, 19) to a rinsing-agent outlet (17) essentially along said outer surface.

2. A device according to claim 1, **characterized in** that said rinsing-agent outlet (17) is in communication with the interior of the milking cup (1) which is adapted to be attached to the cleaning element (10), for successively rinsing the flow chamber (20) and the interior of the milking cup (1).

3. A device according to claim 1 or 2, **characterized in** that the flow chamber (20) extends in the shape of a cap or cover which is attached to the open end of the milking cup (1), especially to the teat rubber (3), whereby the rinsing flow is produced at least along part of the milking-cup end face including the milking-cup opening.

4. A device according to one of the claims 1 to 3, **characterized in** that the cleaning element (10) has a cap-shaped or cup-shaped structural design and is adapted to be attached to the open end of the milking cup (1), whereby a cap-shaped flow chamber (20) is formed, which is sealed due to the fact that essentially the edge of the cap or of the cup abuts on the milking cup (1), and that the cleaning element is provided with means for producing a rinsing flow corresponding essentially to the shape of the flow chamber (20).

5. A device according to claim 4, **characterized in** that the means for producing the rinsing flow include a rinsing-agent loop line (34) which extends approximately at the edge of the cup and which is open towards the flow chamber (20).

6. A device according to claim 4, **characterized in** that, for producing the rinsing flow, the cleaning element (10) is implemented as a double-walled element with a space (13) between the walls, said space (13) between the walls being provided with a rinsing-agent connecting piece (14) and being open towards the flow chamber (20) in an annular shape.

7. A device according to claim 6, **characterized in** that the rinsing-agent connecting piece (14) is arranged such that it is concentric with the axis of the cleaning element (10) and, in the attached condition of the cleaning element, concentric with the axis of the milking cup (1).

8. A device according to one of the claims 1 to 7, **characterized in** that the cleaning element (10) is provided with a sealing lip (15) abutting, in the attached condition, on the milking cup, especially on the outer surface of the teat rubber.

9. A device according to one of the claims 1 to 8, **characterized in** that the cleaning element (10) comprises an annular groove (32) which in the attached condition of the milking cup (1) is sealingly engageable with a corresponding annular shoulder (31) on the milking cup (1) or the teat rubber (3a).

10. A device according to one of the claims 1 to 9, **characterized in** that the cleaning element (10a) is provided with spacers (33) projecting towards the outer surface area of the milking cup to be cleaned.

11. A device according to one of the claims 1 to 10, **characterized in** that the cleaning element (10a) is adapted to be brought into locking engagement with the teat rubber (3a) for fastening on the milking cup (1a).

12. A device according to claim 11, **characterized in** that the cleaning element (10a) is adapted to be brought into locking engagement with the teat rubber (3a) under sealing of the flow chamber (20a).

13. A device according to one of the claims 11 to 10 [sic], **characterized in** that a holding bow (22) is connected to the cleaning element (10), the holding bow being adapted to be brought into locking engagement with the sleeve member (2) of the milking cup (1) whereby the cleaning element (10) is arrested.

14. A device according to claim 13, **characterized in** that in the attached condition of the milking cup the holding bow (22) of the cleaning element (10) is adapted to be brought into locking engagement with an air inlet valve (8) which protrudes from the milking cup (1).

15. A device according to claim 14, **characterized in** that the holding bow includes a rinsing-agent line (24, 38) which is adapted to be connected to the air inlet valve (8, 8b) when the locking engagement is effected.

16. A device according to one of the claims 1 to 15, **characterized in** that the flow chamber (20) is arranged in a closed rinsing-agent circuit including the milk line which extends from the milking cup (1).

17. A device according to claim 16, **characterized in** that a branch of the rinsing-agent circuit can be established through the rinsing-agent line (24) of the holding bow (22).

18. A device according to one of the claims 1 to 17, **characterized in** that a forcing pump or a suction pump is provided for producing the rinsing flow.

19. A device according to one of the claims 1 to 15, **characterized in** that the cleaning element includes a component (16) projecting into the milking-cup interior (21) defined by the teat rubber, said component (16) serving to reduce the rinsing flow cross-section within said interior.

20. A cleaning element which is adapted to be attached to a milking cup (1) for rinsing the inner and the outer side of said milking cup, said cleaning element being attached such that a flow chamber (20) is formed for producing a rinsing flow along an outer surface area of the milking cup (1) which is to be cleaned, **characterized in** that the flow chamber (20) comprises a flow restriction wall (12) which extends in opposed, spaced relationship with the outer surface to be cleaned and which is used for producing a rinsing flow conducted between said flow restriction wall (12) and said outer surface from a rinsing-agent inlet (18, 19) to a rinsing-agent outlet (17) essentially along said outer surface.

21. A cleaning element according to claim 20, **characterized in** that the cleaning element (10; 10a) is adapted to be arrested on the milking cup (1a) with the aid of locking-engagement means (8, 23; 31, 32).

22. A method of cleaning milking cups, comprising the step of rinsing the milking cup by conducting a rinsing flow along an area of the outer surface of the milking cup which is to be cleaned, **characterized in** that a flow restriction wall (12) is arranged in opposed, spaced relationship with the outer surface to be cleaned and that a rinsing flow is conducted between said flow restriction wall (12) and said outer surface from a rinsing-agent inlet (18, 19) to a rinsing-agent outlet (17) essentially along said outer surface.

23. A method according to claim 22, **characterized in** that the outer surface of the milking cup and the milking cup interior formed by the teat rubber are rinsed successively.

24. A method according to claim 22 or 23, characterized in that a rinsing flow is produced, which is concentric with the longitudinal axis of the milking cup and which flows off into the teat opening.

## Revendications

1. Dispositif pour nettoyer des gobelets trayeurs munis de caoutchoucs de traite, comprenant un élément de nettoyage (10) pour le rinçage du gobelet trayeur, qui alimente un détergent et qui peut être appliqué sur un gobelet trayeur (1), l'élément de nettoyage (10) pouvant être appliqué sur le gobelet trayeur en formant une chambre d'écoulement (20) pour générer un courant de rinçage s'exerçant sur une surface externe du gobelet trayeur à nettoyer,
caractérisé en ce que
la chambre d'écoulement (20) présente une paroi de limitation de l'écoulement (12) opposée à la surface externe à nettoyer et écartée de cette dernière pour obtenir un courant de rinçage guidé essentiellement le long de la surface externe, depuis une entrée (18, 19) pour le détergent jusqu'à une sortie (17) pour le détergent, entre la paroi de limitation de l'écoulement (12) et la surface externe.

2. Dispositif selon la revendication 1, caractérisé en ce que la sortie (17) pour le détergent se trouve en liaison avec l'intérieur du gobelet trayeur (1) qui peut venir s'appliquer sur l'élément de nettoyage (10), pour un rinçage complet successif de la chambre d'écoulement (20) et de l'intérieur du gobelet trayeur (1).

3. Dispositif selon la revendication 1 ou 2, caractérisé en ce que la chambre d'écoulement (20) s'étend sous la forme d'un recouvrement, respectivement d'un couvercle appliqué sur l'extrémité ouverte du gobelet trayeur (1), en particulier sur le caoutchouc de traite (3), en générant le courant de rinçage au moins le long d'une partie de la surface frontale du gobelet trayeur, présentant l'ouverture du gobelet trayeur.

4. Dispositif selon l'une quelconque des revendications 1 à 3, caractérisé en ce que l'élément de nettoyage (10) est réalisé en forme de recouvrement, respectivement en forme de gobelet, et peut venir s'appliquer sur l'extrémité ouverte du gobelet trayeur, en formant une chambre d'écoulement (20) en forme de recouvrement rendue étanche par l'application essentiellement du bord de recouvrement, respectivement du gobelet contre le gobelet trayeur (1), et en ce que l'élément de nettoyage présente des moyens pour l'obtention d'un écoulement de rinçage dont la forme correspond essentiellement à celle de la chambre d'écoulement (20).

5. Dispositif selon la revendication 4, caractérisé en ce que les moyens pour l'obtention de l'écoulement de rinçage comprennent une canalisation annulaire (34) pour le détergent s'étendant approximativement sur la périphérie du bord du gobelet et ouverte en direction de la chambre d'écoulement (20).

6. Dispositif selon la revendication 4, caractérisé en ce que l'élément de nettoyage (10) pour l'obtention de l'écoulement de rinçage est réalisé sous la forme d'un élément à double paroi comprenant un espace intermédiaire (13) entre les parois, l'espace intermédiaire (13) entre les parois présentant un raccord (14) pour le détergent et étant ouvert sous forme annulaire en direction de la chambre d'écoulement (20).

7. Dispositif selon la revendication 6, caractérisé en ce que le raccord (14) pour le détergent est prévu en position concentrique à l'axe de l'élément de nettoyage (10), respectivement, à l'état appliqué de l'élément de nettoyage, du gobelet trayeur (1).

8. Dispositif selon l'une quelconque des revendications 1 à 7, caractérisé en ce que l'élément de nettoyage (10) est muni d'une lèvre d'étanchéification (15) venant se disposer, à l'état appliqué, contre le gobelet trayeur, en particulier contre la surface externe du caoutchouc de traite.

9. Dispositif selon l'une quelconque des revendications 1 à 8, caractérisé en ce que l'élément de nettoyage (10) présente une rainure annulaire (32) qui, à l'état appliqué du gobelet trayeur (1), peut être amenée en engrènement d'étanchéité avec une nervure annulaire correspondante (31), contre le gobelet trayeur (1) ou contre le caoutchouc de traite (3a).

10. Dispositif selon l'une quelconque des revendications 1 à 9, caractérisé en ce que l'élément de nettoyage (10a) présente des écarteurs (33) faisant saillie par rapport à la zone de surface externe du gobelet trayeur à nettoyer.

11. Dispositif selon l'une quelconque des revendications 1 à 10, caractérisé en ce que l'élément de nettoyage (10a) peut venir s'encliqueter avec le caoutchouc de traite (3a) à des fins de fixation au gobelet trayeur (1a).

12. Dispositif selon la revendication 11, caractérisé en ce que l'élément de nettoyage (10a) peut venir s'encliqueter avec le caoutchouc de traite (3a) donnant lieu à une étanchéification de la chambre d'écoulement (20a).

13. Dispositif selon l'une quelconque des revendications 1 à 10, caractérisé en ce qu'un étrier de retenue (22) est relié à l'élément de nettoyage (10), qui peut venir s'encliqueter avec la partie de manchon (2) du gobelet trayeur (1), donnant lieu au blocage de l'élément de nettoyage (10).

14. Dispositif selon la revendication 13, caractérisé en ce que l'étrier de retenue (22) de l'élément de nettoyage (10) peut venir s'encliqueter, à l'état appliqué du gobelet trayeur, avec une soupape d'entrée d'air (8) faisant saillie par rapport au gobelet trayeur (1).

15. Dispositif selon la revendication 14, caractérisé en ce que l'étrier de retenue comprend une canalisation de rinçage (24, 38) qui peut venir se raccorder par encliquetage avec la soupape d'entrée d'air (8, 8b).

16. Dispositif selon l'une quelconque des revendications 1 à 15, caractérisé en ce que la chambre d'écoulement (20) est disposée dans un circuit fermé pour le détergent comprenant la canalisation pour le lait se raccordant au gobelet trayeur (1).

17. Dispositif selon la revendication 16, caractérisé en ce que, grâce à la canalisation (24) de l'étrier de retenue (22), pour le détergent, on obtient une branche secondaire du circuit pour le détergent.

18. Dispositif selon l'une quelconque des revendications 1 à 17, caractérisé en ce qu'on prévoit une pompe de pression ou une pompe d'aspiration pour l'obtention du courant de rinçage.

19. Dispositif selon l'une quelconque des revendications 1 à 15, caractérisé en ce que l'élément de nettoyage présente un élément (16) faisant saillie dans l'espace interne (21) du gobelet trayeur, formé par le caoutchouc de traite, pour restreindre la section transversale de l'écoulement de rinçage à l'intérieur de l'espace interne.

20. Elément de nettoyage qui, à des fins de rinçage et de nettoyage interne et externe, peut venir s'appliquer sur un gobelet trayeur (1) en formant une chambre d'écoulement (20) pour obtenir un écoulement de rinçage le long d'une zone superficielle externe du gobelet trayeur (1) à nettoyer, caractérisé en ce que la chambre d'écoulement (20) présente une paroi de limitation de l'écoulement (12) opposée à la surface externe à nettoyer et à l'écart de cette dernière pour obtenir un écoulement de rinçage guidé essentiellement le long de la surface externe, depuis une entrée (18, 19) pour le détergent jusqu'à une sortie (17) pour le détergent, entre la paroi de limitation de l'écoulement (12) et la surface externe.

21. Elément de nettoyage selon la revendication 20, caractérisé en ce que l'élément de nettoyage (10; 10a) peut être bloqué via une fixation par encliquetage (8, 23; 31, 32) sur le gobelet trayeur (1a).

22. Procédé pour nettoyer des gobelets trayeurs, dans lequel a lieu un rinçage du gobelet trayeur en guidant un courant de rinçage le long d'une zone à nettoyer de la surface externe du gobelet trayeur, caractérisé en ce qu'on dispose une paroi de limitation de l'écoulement (12) à l'écart de la surface externe à nettoyer et opposée à cette dernière, et on guide un courant de rinçage essentiellement le long de la surface externe depuis une entrée (18, 19) pour le détergent jusqu'à une sortie (17) pour le détergent, entre la paroi de limitation de l'écoulement (12) et la surface externe.

23. Procédé selon la revendication 22, caractérisé en ce qu'on procède à un rinçage successif de la surface externe du gobelet trayeur et de l'espace interne du gobelet trayeur formé par un caoutchouc à traire.

24. Procédé selon la revendication 22 ou 23, caractérisé en ce qu'on génère un courant de rinçage concentrique à l'axe longitudinal du gobelet trayeur et s'écoulant dans l'ouverture de traite.
